# NEUE EUROPÄISCHE PATENTSCHRIFT

(11) **EP 2 789 527 B2**
(45) Veröffentlichungstag und Bekanntmachung des Hinweises auf die Entscheidung über den Einspruch: **17.07.2019**
(45) Hinweis auf die Patenterteilung: 08.06.2016
(21) Anmeldenummer: 14000968.9
(22) Anmeldetag: 15.03.2014
(51) Int. Cl.: B62D 35/02, B60G 7/00, B60T 5/00, B62D 37/02

(54) **Verfahren zur Herstellung einer Luftleiteinrichtung für einen Fahrwerkslenker und Fahrwerkslenker mit einer Luftleiteinrichtung**
Method for producing an air guiding device for a steering arm and steering arm with an air guiding device
Procédé de fabrication d'un dispositif de guidage d'air pour un bras de suspension et bras de suspension doté d'un dispositif de guidage d'air

(30) Priorität: 11.04.2013 DE 102013006253
(43) Veröffentlichungstag der Anmeldung: 15.10.2014
(73) Patentinhaber: Audi AG, 85045 Ingolstadt (DE)
(72) Erfinder: Ottinger, Andreas, DE - 86641 Rain/Überacker (DE); Langhoff, Hans-Jürgen, DE - 85101 Lenting (DE)

(56) Entgegenhaltungen:
- EP-A1- 0 778 187
- WO-A1-03/042023
- WO-A1-2010/105340
- CN-C- 100 431 859
- DE-A1- 3 110 991
- DE-A1- 3 511 495
- DE-A1- 4 214 912
- DE-A1-102004 004 888
- DE-A1-102011 052 175
- DE-U1-202009 006 966
- FR-A1- 2 918 329
- JP-U- H0 239 906
- JP-U- S6 395 909
- US-A- 2 707 100
- US-A1- 2007 096 420
- US-A1- 2007 096 420
- US-A1- 2012 007 387

## Beschreibung

Die vorliegende Erfindung betrifft einen Fahrwerkslenker mit einer Luftleiteinrichtung, wobei der Fahrwerkslenker ein in Einbaulage nach unten offenes Querschnittsprofil, mit einer Basisfläche und zumindest zwei von der Basisfläche abstehenden Seitenstegen, aufweist und wobei die Luftleiteinrichtung an den Seitenstegen angeordnet werden kann.

Derartige Luftleiteinrichtungen werden im Fahrzeugbau an Fahrwerkslenkern, auch Querlenker oder einfach Lenker genannt, angeordnet, um damit eine bessere Umströmung des Unterbodens im Bereich der Radaufhängung zu erzielen. Die Radaufhängung verbindet das Rad mit der Karosserie und führt es unter Gewährung bestimmter Freiheitsgrade. Fahrwerkslenker können aus umgeformten (Stahl-)Blechen oder aus (umgeformten) Strangpressprofilen, beispielsweise einem Aluminium-Strangpressprofil, erzeugt werden.

Die EP 2 455 244 A1 offenbart einen Lenkerarm zur Anordnung an einer Kraftfahrzeugachse, der aus einem Leichtmetallstrangpressprofil hergestellt wird. Das Verfahren zur Herstellung eines solchen Lenkerarms umfasst die Schritte Bereitstellen eines Halbzeuges aus einem Leichtmetallstrangpressprofil, welches eine Pi-förmige Querschnittskonfiguration mit einem Bodensteg und sich von dem Bodensteg erstreckenden Seitenstegen und gegenüber den Stegen abstehende Schenkel besitzt, Schneidetechnisches Bearbeiten des Halbzeuges, Einbringen von Lageraufnahmeöffnungen und abschnittsweises Aufweiten des bearbeiteten Halbzeuges. Die Pi-förmige Querschnittskonfiguration bietet im Vergleich zu geschlossenen Profilen produktionstechnische Vorteile und ist durch das eingesparte Material auch leichter. Nachteilig ist die verringerte Steifigkeit, die aus der offenen Profilform resultiert.

Die EP 2 435 288 A1 zeigt eine Luftleiteinrichtung an einem etwa quer zur Fahrtrichtung verlaufenden Radführungselement einer Hinterachse eines Kraftfahrzeugs, wobei die Luftleiteinrichtung in Ihrer Einbaulage am Kraftfahrzeug im Wesentlichen etwa horizontal verläuft und in einen Abschnitt vor der Hinterachse sowie in einen Abschnitt hinter der Hinterachse unterteilt ist, wobei die beiden Abschnitte mit unterschiedlichen Winkeln zu einer horizontalen Ebene verlaufen und ausgehend von ihrem Übergangsbereich aufwärts gerichtet sind.

Die DE 31 10 991 A1 beschreibt einen Kraftwagen mit Radführungsgliedern in Form von Lenkern mit strömungsgünstigen Verkleidungen, die schalenförmig ausgebildet und als separate Bauteile an den Radführungsgliedern befestigt sind. Die Verkleidungen können als integrierte Bestandteile oder als Schließbleche von Hohlträgern ausgebildet sein. Als nachteilig stellt sich das hohe zusätzliche Gewicht der Verkleidungen dar, wenn diese erfindungsgemäß mit den metallischen Radführungsgliedern gefügt werden sollen, da diese als integraler Bestandteil oder als Schließblech aus fügetechnischen Gründen ebenfalls aus einem Metall bestehen müssen.

Die FR 2 918 329 A1 offenbart ein Verfahren zur Herstellung einer Luftleiteinrichtung für einen Fahrwerkslenker, umfassend die Schritte Bereitstellen eines Versteifungselements zur Anordnung an dem Fahrwerkslenker und Umspritzen des Versteifungselements mit einem Luftleitelement aus einem Kunststoff. Weiterhin wird ein Fahrwerkslenker mit einer solchen Luftleiteinrichtung gezeigt.

Die US 2007/0096420 A1 zeigt einen Fahrwerkslenker mit einer Luftleiteinrichtung, wobei der Fahrwerkslenker ein in Einbaulage nach unten offenes Querschnittsprofil, mit einer Basisfläche und zumindest zwei von der Basisfläche abstehenden Seitenstegen, aufweist und wobei die Luftleiteinrichtung ein formschlüssig an den Seitenstegen des Fahrwerkslenkers festlegbares Luftleitelement aus einem Kunststoff umfasst. Eine Versteifungswirkung des Luftleitelements auf das offene Querschnittsprofil gibt es nicht.

Die US 2012/0007387 A1 beschreibt einen Drehstabstabilisator mit einer Luftleiteinrichtung, wobei die Luftleiteinrichtung den Drehstabstabilisator unter Einhaltung eines bestimmten Freigangs umgibt.

Die DE 10 2011 052 175 A1 offenbart einen Fahrwerkslenker mit einer Luftleiteinrichtung, wobei die Luftleiteinrichtung ein formschlüssig an dem Fahrwerkslenker festlegbares Luftleitelement aus einem Kunststoff umfasst, das darüber hinaus in Fahrzeughochrichtung ausgerichtet ist.

Aufgabe der vorliegenden Erfindung ist es daher einen Fahrwerkslenker mit einer Luftleiteinrichtung bereitzustellen, die eine Steifigkeitserhöhung des Fahrwerkslenkers in Verbindung mit geringem zusätzlichen Gewicht ermöglicht.

Diese Aufgabe wird durch den Patentanspruch 1 gelöst.

Ein Fahrwerkslenker hat eine Luftleiteinrichtung, wobei der Fahrwerkslenker ein in Einbaulage nach unten offenes Querschnittsprofil, mit einer Basisfläche und zumindest zwei von der Basisfläche abstehenden Seitenstegen, aufweist und wobei die Luftleiteinrichtung ein Versteifungselement zur Anordnung an den Seitenstegen und ein Luftleitelement aus einem Kunststoff umfasst.

Indem die Seitenstege des nach unten offen ausgebildeten Fahrwerkslenkers (Pi-förmiges Querschnittsprofil) mit dem Versteifungselement der Luftleiteinrichtung verbunden werden, kann die Steifigkeit des Fahrwerkslenkers erheblich gesteigert werden. Das der Luftleiteinrichtung ebenfalls zugehörige Luftleitelement aus Kunststoff schließt sich dem Versteifungselement an und ist aerodynamisch ausgeformt, um in der Einbaulage des Fahrwerkslenkers im Fahrzeug eine gute Unterbodenumströmung zu erzielen. Der hybride Aufbau der Luftleiteinrichtung erzielt eine gute Versteifungswirkung bei gleichzeitiger Gewichtsersparnis.

Das Luftleitelement ist formschlüssig mit dem Versteifungselement verbunden. Der Formschluss ist bevorzugt durch ein Umspritzen des Versteifungselements mit dem Luftleitelement zu erreichen.

Das Versteifungselement ist plattenförmig oder kreuzförmig ausgebildet. Die Kreuzform bietet bei gleichen Steifigkeitseigenschaften ein höheres Potential zur Gewichtsersparnis, als die einfache Plattenform.

In einer bevorzugten Ausführung des Fahrwerkslenkers weist das Versteifungselement zumindest eine Aufnahme für ein als Schraube oder Niet ausgebildetes Befestigungsmittel auf. Das Verschrauben des Versteifungselements erlaubt die lösbare Befestigung an dem Fahrwerkslenker, was Vorteile bei Reparaturen bietet. Der Niet kommt hingegen mit geringerem Bauraum aus. In allen Fällen sind jedoch abgewinkelte Enden der Seitenstege vorzusehen, in die die Befestigungsmittel eingebracht werden können.

In einer bevorzugten Ausführung des Fahrwerkslenkers besteht das Versteifungselement aus einem faserverstärktem Kunststoff, wobei die Aufnahme durch eine metallische Hülse gebildet wird. Als faserverstärkte Kunststoffe eignen sich glasfaserverstärkter Kunststoff (GFK), kohlenstofffaserverstärkter Kunststoff (CFK) oder Kunststoff mit integrierten Kurzfasern. Bei der Wahl von Kurzfasern können Versteifungselement und Luftleitelement in einem Spritzvorgang erzeugt werden, wobei dem Versteifungselement zur Steifigkeitserhöhung Kurzfasern beigefügt werden. Die metallische Hülse wird benötigt, wenn das Befestigungsmittel mit Kunststoffen in Kontakt kommt, da sonst kein ausreichendes Anzugsdrehmoment aufgebaut werden kann. Zur Sicherung der Hülse in der Aufnahme können deren Enden umgebördelt werden.

In einer bevorzugten Ausführung des Fahrwerkslenkers ist das Luftleitelement schalenförmig ausgebildet und erstreckt sich in Querrichtung des Fahrwerkslenkers über diesen hinaus. Die Schalenform erzeugt neben den guten aerodynamischen Eigenschaften einen Schutz vor Steinschlag für den Fahrwerkslenker. Die genaue geometrische Ausgestaltung wird durch den Einzelfall bestimmt.

Ein Verfahren zur Herstellung einer Luftleiteinrichtung für einen Fahrwerkslenker umfasst die folgenden Schritte:
- Bereitstellen eines Versteifungselements zur Anordnung an dem Fahrwerkslenker;
- Umspritzen des Versteifungselements mit einem Luftleitelement aus einem Kunststoff.

Indem ein Versteifungselement mit einem Luftleitelement aus Kunststoff umspritzt wird, entsteht eine hybride Luftleiteinrichtung mit an den jeweiligen Einsatzzweck angepassten Materialeigenschaften. So ist das Versteifungselement steifer als das Luftleitelement ausgebildet, um bei Anordnung an dem Fahrwerkslenker dessen Steifigkeit insgesamt erhöhen zu können. Das Luftleitelement hingegen benötigt keine hohe Steifigkeit, sondern sollte sogar eher elastisch sein, um Steinschläge oder andere anschlagende Objekte unbeschadet absorbieren zu können. Das Luftleitelement kann dementsprechend aus einem leichten und dünnen Kunststoff gebildet werden. Die Luftleiteinrichtung ist somit insgesamt leicht, verbessert aber bei Anordnung an dem Fahrwerkslenker dennoch dessen Steifigkeit.

In einer bevorzugten Ausführung des Verfahrens wird in einem weiteren Verfahrensschritt zumindest eine Aufnahme für ein Befestigungsmittel in das Versteifungselement eingebracht. Dieser Verfahrensschritt kann beispielsweise am Ende des Verfahrens erfolgen und als Bohrvorgang ausgeführt sein. Beim Durchbohren des Versteifungselements und eventuell auch des das Versteifungselement teilweise ummantelnden Luftleitelements kann eine gerade fluchtende Öffnung erzielt werden. Alternativ kann die Aufnahme bereits in das Versteifungselement eingearbeitet werden, beispielsweise beim Gießvorgang oder beim Umwickeln mit Kunstfasern.

In einer bevorzugten Ausführung des Verfahrens besteht das Versteifungselement aus einem Metall (Stahl, Aluminium, Magnesium, etc.). Ein metallisches Versteifungselement bietet gute Steifigkeitseigenschaften bei überschaubaren Kosten und geringem Bearbeitungsaufwand. Die zumindest eine Aufnahme für ein Befestigungsmittel wird in diesem Fall vorzugsweise als eine Durchgangsbohrung ausgeführt, da das metallische Versteifungselement besonders leicht spanend bearbeitet werden kann.

In einer bevorzugten Ausführung des Verfahrens besteht das Versteifungselement aus einem faserverstärktem Kunststoff. Als faserverstärkte Kunststoffe eignen sich glasfaserverstärkter Kunststoff (GFK), kohlenstofffaserverstärkter Kunststoff (CFK) oder Kunststoff mit integrierten Kurzfasern. Diese Art von Kunststoffen sind deutlich leichter als die meisten metallischen Werkstoffe, jedoch steigen Kosten und Bearbeitungsaufwand.

In einer bevorzugten Ausführung des Verfahrens umfasst die zumindest eine Aufnahme für ein Befestigungsmittel eine metallische Hülse. Die metallische Hülse wird dann benötigt, wenn das Befestigungsmittel mit Kunststoffen in Kontakt kommt, da sonst kein ausreichendes Anzugsdrehmoment aufgebaut werden kann. Zur Sicherung der Hülse in der Aufnahme können deren freie Enden umgebördelt werden.

In einer bevorzugten Ausführung des Verfahrens wird die Hülse während der Herstellung des Versteifungselements in dieses eingebettet. Eine mögliche Ausführungsform wäre beispielsweise die Hülsen in einer Vorrichtung an den vorgesehenen Positionen zu fixieren, um sie anschließend mit Kunstfasern zu umwickeln. Bei einer Vierecksanordnung der Hülsen können beispielsweise die diagonal gegenüberliegenden Hülsen miteinander durch Kunstfasern verbunden werden, so dass sich eine kreuzförmige Struktur des Versteifungselements ergibt. Die Kunstfasern werden mit Harz getränkt, das anschließend aushärtet.

Weitere Einzelheiten und Vorteile der Erfindung ergeben sich aus der nachstehenden Beschreibung eines bevorzugten Ausführungsbeispiels unter Bezugnahme auf die Zeichnungen.

Darin zeigen:
Fig. 1 eine Ansicht von unten auf einen Fahrwerkslenker mit einer Luftleiteinrichtung;
Fig. 2 eine isometrische Ansicht eines Fahrwerkslenkers mit einer Luftleiteinrichtung;
Fig. 3 eine Schnittansicht einer ersten Ausführungsform der Luftleiteinrichtung;
Fig. 4 eine Schnittansicht einer zweiten Ausführungsform der Luftleiteinrichtung.

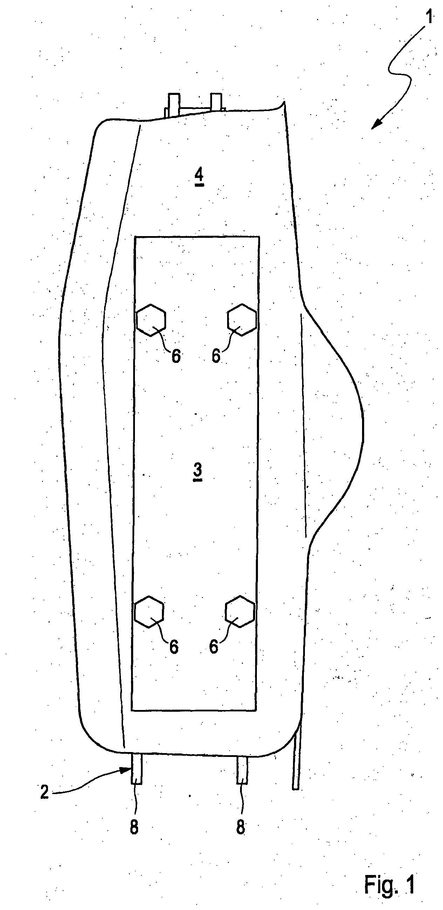

Gemäß der Fig. 1 hat eine Luftleiteinrichtung 1 ein Versteifungselement 3 mit einem daran angegossenen Luftleitelement 4 aus Kunststoff. Das Versteifungselement 3 weist gegenüber dem Luftleitelement 4 eine höhere Steifigkeit auf. Das Versteifungselement 3 kann mit Befestigungsmitteln 6 an dem Fahrwerkslenker 2 befestigt werden und steift diesen dadurch aus. Das Luftleitelement 4 ist aerodynamisch so geformt, dass es bei Einbau des Fahrwerkslenkers 2 in die Radaufhängung eines Fahrzeugs die Luftströmung in diesem Bereich verbessert und den Fahrwerkslenker 2 gegen Steinschlag schützt.

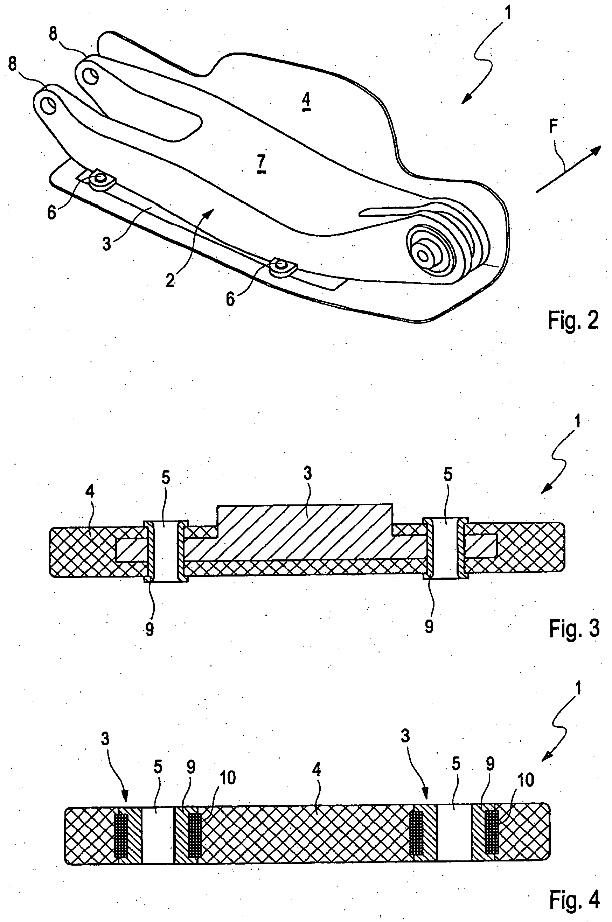

In Fig. 2 ist der Fahrwerkslenker 2, bestehend aus einer Basisfläche 7 und zwei von der Basisfläche 7 im Wesentlichen rechtwinklig abstehenden Seitenstegen 8, gezeigt. Die Seitenstege 8 sind an ihren unteren Ende zur Horizontalen abgewinkelt, so dass dort die Befestigungsmittel 6 zur Anordnung des Versteifungselements 3 der Luftleiteinrichtung 1 aufgenommen werden können. Das Luftleitelement 4 deckt den Fahrwerkslenker 2 in Fahrtrichtung F ab.

Gemäß der Fig. 3 hat eine erste Ausführungsform der Luftleiteinrichtung 1 ein metallisches Versteifungselement 3, das von einem Luftleitelement 4 aus Kunststoff umspritzt ist. In das so gebildete Halbzeug werden Durchgangsbohrungen als Aufnahmen 5 für Befestigungsmittel 6 gebohrt. Zur Gewährleistung eines bestimmten Anzugdrehmoments der nicht dargestellten Befestigungsmittel 6 wird eine metallische Hülse 9 in die Aufnahmen 5 eingebracht und zur Fixierung die freien Enden der Hülse 9 umgebördelt.

Gemäß der Fig. 4 hat eine zweite Ausführungsform der Luftleiteinrichtung 1 metallische Hülsen 9 als Aufnahmen 5 für nicht dargestellte Befestigüngsmittel 6. Die Hülsen 9 werden positioniert und anschließend mit Kunstfasern 10 eines faserverstärkten Kunststoffs zur Bildung des Versteifungselements 3 umwickelt. Die Kunstfasern 10 werden dazu mit einem Harz getränkt und im Anschluss ausgehärtet. Das so geschaffene Versteifungselement 3 wird mit einem weiteren Kunststoff zur Bildung des Luftleitelements 4 umspritzt.

### Liste der Bezugszeichen:

- F: Fahrtrichtung

- 1: Luftleiteinrichtung
- 2: Fahrwerkslenker
- 3: Versteifungselement
- 4: Luftleitelement
- 5: Aufnahme
- 6: Befestigungsmittel
- 7: Basisfläche
- 8: Seitensteg
- 9: Hülse
- 10: Kunstfasern

## Patentansprüche

1. Fahrwerkslenker (2) mit einer Luftleiteinrichtung (1), wobei der Fahrwerkslenker (2) ein in Einbaulage nach unten offenes Querschnittsprofil, mit einer Basisfläche (7) und zumindest zwei von der Basisfläche (7) abstehenden Seitenstegen (8), aufweist und die Luftleiteinrichtung (1) ein Luftleitelement (4) und ein Versteifungselement (3) umfasst, wobei das Versteifungselement (3) plattenförmig oder kreuzförmig ausgebildet, an den Seitenstegen (8) angeordnet und mit dem aus einem Kunststoff bestehenden Luftleitelement (4) formschlüssig verbunden ist.

2. Fahrwerkslenker (2) nach Anspruch 1, **dadurch gekennzeichnet, dass** das Versteifungselement (3) zumindest eine Aufnahme (5) für ein als Schraube oder Niet ausgebildetes Befestigungsmittel (6) aufweist.

3. Fahrwerkslenker (2) nach einem der Ansprüche 1 oder 2, **dadurch gekennzeichnet, dass** das Versteifungselement (3) aus einem faserverstärkten Kunststoff besteht, wobei die Aufnahme (5) durch eine metallische Hülse (9) gebildet wird.

4. Fahrwerkslenker (2) nach einem der Ansprüche 1 bis 3, **dadurch gekennzeichnet, dass** das Luftleitelement (4) schalenförmig ausgebildet ist und sich in Querrichtung des Fahrwerkslenkers (2) über diesen hinaus erstreckt.

## Claims

1. Suspension link (2) with an aerodynamic device (1), the suspension link (2) having an open cross-sectional profile facing downwards in an installation position, with a base face (7) and at least two side webs (8) projecting from the base face (7), and the aerodynamic device (1) including an aerodynamic element (4) and a stiffening element (3), wherein the stiffening element (3) is flat or cruciform in shape, is arranged on the side webs (8) and is positively attached to the aerodynamic element (4) made of plastic.

2. Suspension link (2) according to claim 1, **characterised in that** the stiffening element (3) has at least one mounting (5) for a fastener (6) in the form of a bolt or rivet.

3. Suspension link (2) according to one of claims 1 or 2, **characterised in that** the stiffening element (3) consists of fibre-reinforced plastic, the mounting (5) comprising a metal sleeve (9).

4. Suspension link (2) according to one of claims 1 to 3, **characterised in that** the aerodynamic element (4) is dished and extends across and beyond the suspension link (2).

## Revendications

1. Bras de suspension (2) avec un dispositif de guidage d'air (1), dans lequel le bras de suspension (2) présente un profil de section transversale ouvert vers le bas en position d'installation, avec une surface de base (7) et au moins deux traverses latérales (8) dépassant de la surface de base (7) et le dispositif de guidage d'air (1) comporte un élément de guidage d'air (4) et un élément de renforcement (3), dans lequel l'élément de renforcement (3) est agencé en forme de plaque ou en forme de croix sur les traverses latérales (8) et est raccordé avec complémentarité de formes à l'élément de guidage d'air (4) constitué d'une matière plastique.

2. Bras de suspension (2) selon la revendication 1, **caractérisé en ce que** l'élément de renforcement (3) présente au moins un logement (5) pour un moyen de fixation (6) réalisé comme une vis ou un rivet.

3. Bras de suspension (2) selon l'une quelconque des revendications 1 ou 2, **caractérisé en ce que** l'élément de renforcement (3) se compose d'une matière plastique renforcée de fibres, le logement (5) étant formé par une douille métallique (9).

4. Bras de suspension (2) selon l'une quelconque des revendications 1 à 3, **caractérisé en ce que** l'élément de guidage d'air (4) est réalisé en forme de coque et s'étend dans le sens transversal du bras de suspension (2) au-delà de celui-ci.
